# EUROPEAN PATENT APPLICATION

(11) **EP 0 892 519 A2**
(43) Date of publication of application: **20.01.1999**
(21) Application number: 98113398.6
(22) Date of filing: 17.07.1998
(51) Int. Cl.: H04L 9/08

(54) **System and method for secure data transmission**

(30) Priority: 17.07.1997 US 895877
(71) Applicant: PITNEY BOWES INC., Stamford Connecticut 06926-0700 (US)
(72) Inventor: Daniels, Edward P., Jr., Trumbull, Connect. 0661 (US)
(74) Representative: Avery, Stephen John

(57) **Abstract**

A method and system for providing security to a communication system having a plurality of system users. The communication system includes first and second user sites wherein the first site includes means for generating a first encryption key and the second site includes means for generating a second encryption key that is unique relative to the first encryption key. Further included is a key management datacenter that is connected to the first and second user sites and is configured to generate both the first and second encryption keys whereby the datacenter is operative to decrypt encrypted data send by the first user site with the first encryption key and encrypt the data with the second encryption key and transmit the encrypted data to the second user site.

## Description

The present invention relates generally to securing electronic data communications using cryptography. More particularly, the present invention provides a method and system for enhancing the security of transmitting data packets over Internet communication lines using key management techniques.

As is well known, the Internet comprises a spider web of connected networks, which crisscross the globe and permit users to send and receive data packets between personal computers. As a result of the dramatic increase in the use of the Internet throughout the world, concerns regarding network security naturally arise. To address these concerns, cryptosystems have been developed for maintaining the privacy of information transmitted across the Internet. Often, a symmetric cryptosystem is used for this purpose. Symmetric cryptosystems, which utilize electronic keys, can be likened to a physical security system where a box has a single locking mechanism with a single keyhole. One key holder uses the key to open the box, place a message in the box and re-lock the box. Only a second holder of the identical copy of the key can unlock the box and retrieve the message. The term symmetric reflects the fact that both users must have identical keys.

In more technical terms, a symmetric cryptosystem comprises an encryption function, a decryption function, and a shared secret key. The key is a unique string of data bits to which the functions are applied. Two examples of the encipherment/decipherment functions are the National Bureau of Standards Dating Encryption Standard (DES) and the more recent Fast Encipherment Algorithm (FEAL). To transmit a message in privacy, the sender computes "cipher text," which is a function of the encryption function along with the shared secret key and the message to be transmitted. Upon receipt of the cipher text, the recipient computes a transmitted message, which is a function of the decryption function along with the cipher text and the shared secret key, to recover the message. An eavesdropper, who copies the cipher text, but does not know the shared secret key, will find it practically impossible to recover the message. Typically, all details of the enciphering and deciphering functions are well known, and the security of the systems depend solely on maintaining the secrecy of the shared secret key. Conventional symmetric cryptosystems are fairly efficient and can be used for encryption at fairly high data rates, especially if appropriate hardware implementations are used.

Another type of cryptosystem is an asymmetric cryptosystem, which is often referred to as a public key cryptosystem that provides another means of encrypting information. Such an asymmetric system differs from the aforesaid symmetric systems in that, in terms of physical analogue, the box has one lock with two non-identical keys associated with it. For example, in a RSA system, either key can be used to unlock the box to retrieve a message, which message has been locked in the box by the other key. However, the system could be limited to using the keys in a particular sequence, such that the box can only be locked with one key and unlocked with the other key. An example of an asymmetric cryptosystem is a public key electronic cryptosystem in which each entity, has a private key which is known only to that entity, and a public key, which is publicly known. Once a message is encrypted with a users public key, it can only be decrypted using that users private-key, and conversely, if a message is encrypted with a user's private key, it can only be decrypted using that user's public-key.

However, regardless of whether a symmetric or asymmetric cryptosystem is implemented for providing security regarding data transmissions on the Internet, unscrupulous parties inevitably find ways to "crack" implemented cryptosystems so as to fraudulently obtain and read the transmitted data. One known way to crack cryptosystems is for an unscrupulous party to gain access to the one encryption key in a symmetric cryptosystem, or to both keys (e.g., public and private) in an asymmetric cryptosystem.

Thus, it is an object of the present invention to provide an enhanced security scheme using a key management system that prevents unscrupulous parties from fraudulently obtaining transmitted data by preventing the unscrupulous party from obtaining the pertinent keys.

The present invention relates to a method and system for providing security to a communication system having a plurality of system users. The communication system includes first and second user sites wherein the first site includes means for generating a first encryption key and the second site includes means for generating a second encryption key that is unique relative to the first encryption key. The first user site is preferably operative to generate a different first encryption key each time encrypted data is transmitted to the key management datacenter. And, similarly, the second user site is operative to generate a different second encryption key each time encrypted data is transmitted from the key management datacenter to the second user site.

Further included in the present invention system is a key management datacenter that is connected to the first and second user sites and is configured to generate both the first and second encryption keys whereby the datacenter is operative to decrypt encrypted data transmitted by the first user site with the first encryption key and encrypt the data with the second encryption key and subsequently transmit the encrypted data to the second user site. Preferably, the key management datacenter is operative to generate the first encryption key each time the first user site generates a different first encryption key and to generate the second encryption key each time the second user site generates a different second encryption key.

The above and other objects and advantages of the present invention will become more readily apparent upon consideration of the following detailed description, taken in conjunction with accompanying drawings, in which like reference characters refer to like parts throughout the drawings and in which:
Fig 1 is a block diagram embodying the system of the present invention; and
Figs 2 and 3 are flow charts depicting the method of use of the system of Fig. 1.

In the following description, numerous specific details are set forth such as system and network configurations, representative data packets, messages, and devices, etc., to provide a thorough understanding of the present invention. However it will become apparent to one skilled in the art that the present invention may be practiced without these specific details. In other instances, well known circuits, structures and specific methods for deriving an encryption key are not described in detail in order not obscure the present invention.

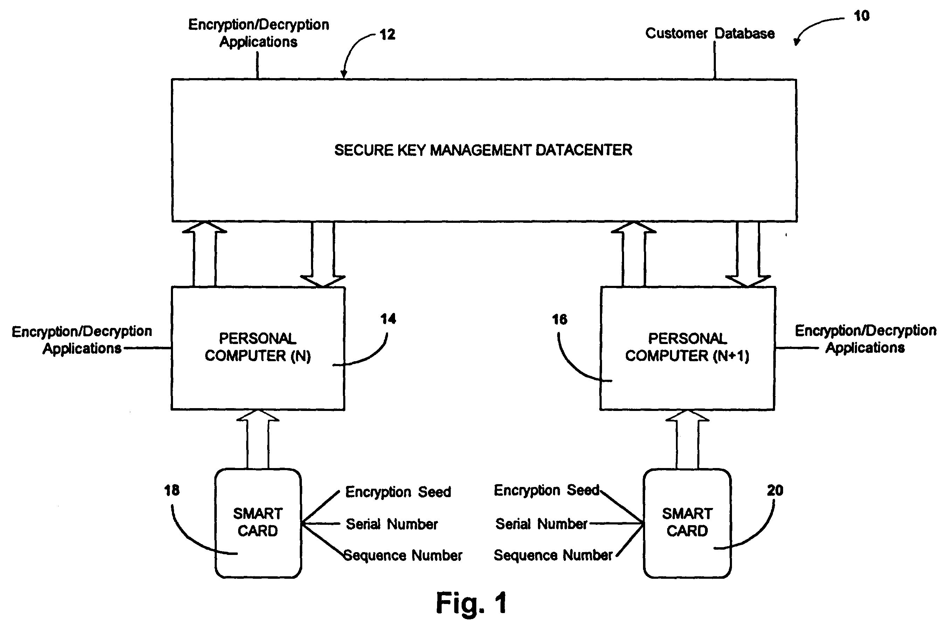

In FIG. 1, there is shown generally at 10 an overall system in accordance with the invention which is practiced on an unsecured public communications network, such as the Internet, for connecting a plurality of computers. In the embodiment illustrated, system 10 comprises a secure key management datacenter 12 connectable to a plurality of user sites (N through N+1). Each user site preferably includes a personal computer configured to accept a smart card. For ease of illustration, description of system 10 will be done so in conjunction only with first (N) and second user sites (N+1), each site including a respective personal computer 14 and 16 having the appropriate hardware enabling the acceptance of a smart card. Those skilled in the art will appreciate that the term "smartcard", as used herein is intended to refer to a variety of media, including both integrated circuit "chipcards" and PCMCIA cards.

It is of course to be appreciated that system 10 is not to be understood to be limited to only two user sites as it is intended to be used with a plurality of user sites. It is to be further appreciated that system 10 is to be described in terms of a symmetric cryptosystem, but it is to be appreciated that the present invention system 10 is not to be understood to be limited such a symmetric application as one skilled in the art could readily adapt the below described system 10 for use in asymmetric cryptosystem applications.

As will be discussed in more detail below, system 10 is operational to enable secure data transfer between at least two user sites. Data security is provided by datacenter 12 through the utilization of a Key Management System, which Key Management Systems are well known, an example of which can be found in U.S. Patent Number 5,390,251 assigned to the assignee of the present invention and which is incorporated by reference herein. Essentially, the present invention system 10 provides security by requiring that each time data is to be transferred between two users 14 and 16, two unique encryption schemes are utilized wherein the respective keys for each encryption scheme are only known to that user implementing that particular encryption scheme and a key management datacenter that securely stores and tracks each encryption key.

As mentioned above, each personal computer 14 and 16 is configured to accept a smart card 18 and 20, wherein each smart card includes an encryption seed, a serial number and a sequence number. The serial number is unique to each smart card 18 and 20, and is functional to identify a user's personal computer 14 and 16 to secure key management datacenter 12. The encryption seed is defined as a unique set of number used to generate the key and the sequence number is defined as the number of seeds generated. As is conventional, the encryption seed and sequence number are functional with one another to generate an encryption key enabling a personal computer 14 and 16 to perform encryption and decryption applications, as will be described further below.

It is to be understood that each smart card 14 and 16 intended for use with system 10 consists of preferably a wallet sized card that stores data (e.g., the encryption seed, serial number and sequence number) in a mechanism of storage typically involving a small computer chip containing non-volatile memory to store the information. Specialized equipment is implemented either internal or external of each personal computer 14 and 16 so as to enable each personal computer 14 and 16 to preferably read and write information onto the chip. It is to be appreciated that other recently developed systems exist for storing information directly onto a smart card such as optically storing data on a card or embedding encoded information onto a smart card in alphanumeric form, which information is retrieved by means of an optical scanner.

Each personal computer 14 and 16 preferably includes known means for establishing electronic communication with the secure key management datacenter 12. For example, each personal computer 14 and 16 may include a modem (not shown) for establishing data communication with secure key management data center 12 using conventional modem techniques.

Regarding secure key management datacenter 12, it similarly includes means for establishing electronic communication with each personal computer 14 and 16. As will be described further below, datacenter 12 includes a customer database for identifying a particular user (via their respective smart card serial number). Datacenter 12 also includes the encryption and decryption applications (e.g., the encryption seed and sequence number) required to securely transmit data between the first and second users 14 and 16. Essentially, datacenter 12 generates the encryption keys necessary encrypt and decrypt data transmitted between the first and second personal computers 14 and 16 as well as contains the software applications that retrieves the addressing information from the transmitted data, as will also be described further below.

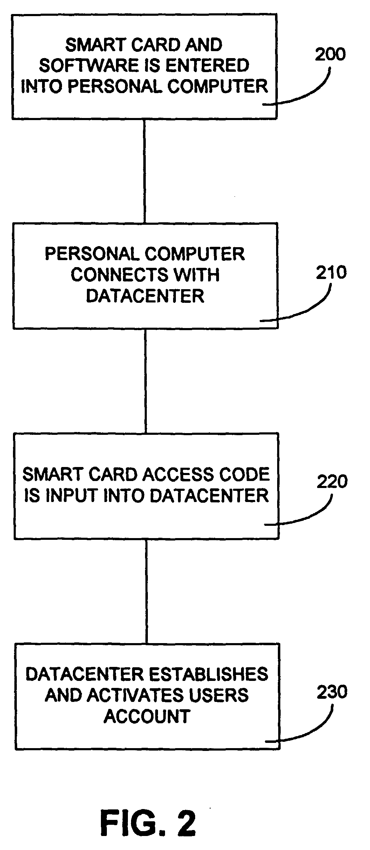

With the basic elements of system 10 being described above, discussion will now turn toward its method of use with reference to Fig. 2 in conjunction with FIG. 1. Initially each user loads a software package (not shown) and enters a smart card 18 and 20 and into a respective computer 14 and 16, step 200. It is to be appreciated that the aforesaid software package provides the necessary sequencing steps that enables each computer to perform the below described steps for: (1) encrypting a document, (2) transmitting a document to a recipient (via the secure key management datacenter) and 3) decrypting a transmitted encrypted document sent to it by datacenter 12. Next, the user of each computer 14 and 16 electronically connects with datacenter 12 (e.g., via a modem, T1 line, etc.), step 210, such that the unique smart card access code that is provided with each smart card 18 and 20 is input into the customer database of datacenter 12, step 220. The customer database of datacenter 12 then activates the account for the smart card associated with the aforesaid transmitted access code. With the exception of inputting a smart card 18 and 20 into a personal computer 14 and 16, the above steps only need to be initially performed when a user implements the system 10 of the present invention to securely transmit data.

It is to be appreciated that datacenter 12 has the pre-stored encryption seed, serial number and sequence number for each smart card. Thus, as will be described below, datacenter 12 is enabled to generate the proper encryption key that is currently associated with each smart card 18 and 20, the significance of which will become apparent below.

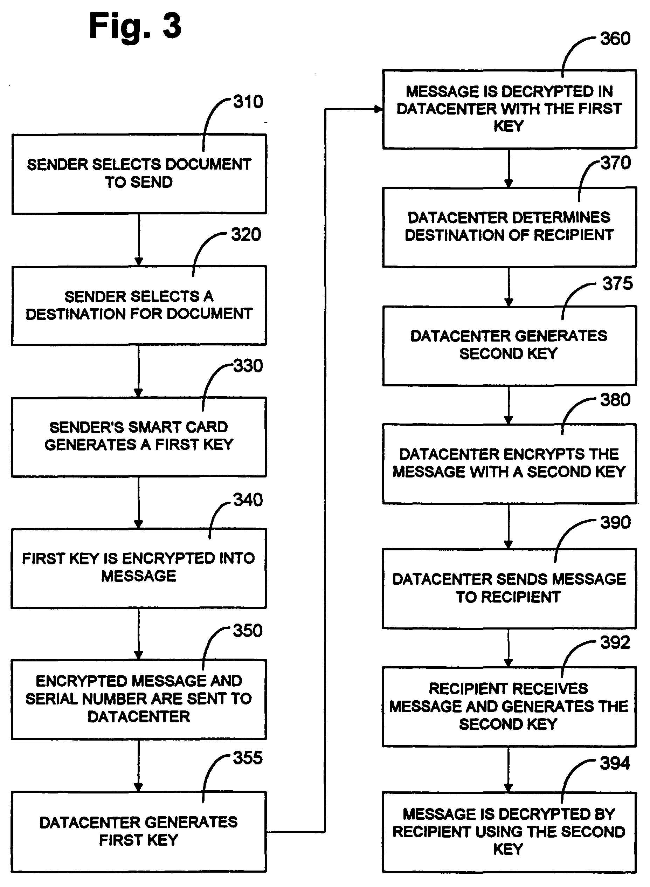

Referring now to Fig. 3, when a user of a first computer 14 (the sender) desires to securely transmit data to another computer 16 (the recipient), the sender selects the data to be transmitted, step 310. For ease of discussion, data is to be referred to hereafter as a "document" and is to encompass any type of data capable of being stored in a computer. The sender of computer 14 then selects a destination for the document (e.g., the internet address (URL) of the recipients computer 16), step 320. The senders computer 14 then generates an encryption key (the "first key") through utilization of the encryption seed and sequence number of its associated smart card 18, step 330. The sender's computer 16 then encrypts the document to be transmitted along with the recipient's computer address through utilization of this generated first key, step 340. Thus, as mentioned above, this document can now be known as "cipher text." The encrypted document (cipher text) and the serial number of the smart card 18 associated with the sender's computer 14 is then electronically transmitted to datacenter 12.

It is to be appreciated that the next time the sender's computer 14 is requested to generate an encryption key (either for encrypting or decrypting applications) the encryption seed and sequence number of it's associated smart card 18 generates an encryption key which is unique relative to its preceding generated encryption key and which is naturally non-capable of decrypting a document encrypted with the aforesaid generated encryption key.

After the sender's computer 14 transmits the encrypted document and the serial number of it's associated smart card 18 to datacenter 12, datacenter 12 receives the encrypted document and generates the first encryption key used by the sender's computer 14 to encrypt the document by utilizing the transmitted serial number, step 350. This serial number of smart card 18 is used by datacenter 12 to index the senders account so as to generate the identical key used to encrypt the document, step 355. That is, datacenter 12 retrieves the encryption seed and sequence number from its storage that are associated with the sender's smart card 18 enabling generation of the first key. The first key is then utilized by datacenter 12 to decrypt the transmitted encrypted document, step 360. After the transmitted document of the sender's computer 14 is decrypted with the first key, datacenter 12 determines the address of the recipients computer 16 (which address was encrypted in the document transmitted from the sender's computer 14), step 370. The address of the recipient's computer 16 is then used as an index to generate another encryption key unique to the aforesaid first key (the "second key"). This second key is a function of the encryption seed and sequence number of the smart card 20 associated with the recipient's computer 16, step 375. It is to be appreciated that this second key is the encryption key that is to be used for decrypting purposes by the recipient's computer 16 (as generated by it's associated smart card 20, via it's current encryption seed and sequence number). It is also pointed out that this second key is non-capable of decrypting a document encrypted by the first key since the first and second keys are unique relative to one another.

At step 380, datacenter 12 once again encrypts the document, but this time the document is encrypted with the second key and not the first key. It is pointed out that the sender's computer 14 is unaware of this second key and further is unable to determine it, which is a security feature of the present invention system 12. Next, datacenter 12 transmits the encrypted document to the recipient's computer 14, step 390. The recipient's computer 16 then receives the encrypted document, and upon receipt of the document, the recipient's computer 16 generates the second key, step 392. As mentioned above, the second key is generated in dependence upon the current encryption seed and sequence number of the smart card 20 associated with the recipient's computer 16. The recipient's computer 16 then decrypts the encrypted document with the second key enabling a user of the recipient's computer 16 to retrieve and preferably read the document, step 394.

As with the sender's computer 14, the next time an encryption key is required from the recipient's computer 16 (via it's smart card 20), it will be unique from it's previous generated key because it's encryption seed changes after each time a key is generated. And as explained above, the change of the encryption key in smart card 20 occurs identically in regards to how it is currently stored in datacenter 12 (which applies to all smart cards utilized in the present invention system 10). Thus, the secure key management datacenter 12 manages all the tracking permutations of the encryption keys associated with the smart cards of system 12.

Therefore, datacenter 12 provides enhanced security for the transfer of data between computers by requiring a sender's computer to utilize a first encryption key and the recipient's computer to utilize a second encryption key, whereby the first and second keys are unique relative to one another and it is only datacenter 12 that is aware and capable of generating both the first and second keys.

In summary, a system requiring unique first and second encryption keys for transmitting a document between first and second computers using key management techniques has been described. Although the present invention has been described with emphasis on a particular embodiment using key management techniques for transmitting data, it should be understood that the figures are for illustration of the exemplary embodiment of the invention and should not be taken as limitations or thought to be the only means of carrying out the invention. Further, it is contemplated that many changes and modifications may be made to the invention without departing from the scope and spirit of the invention as disclosed.

## Claims

1. A secure communication system having a plurality of system users, the communication system comprising:
at least first and second user sites wherein the first site includes means for generating a first encryption key and the second site includes means for generating a second encryption key that is unique relative to the first encryption key; and
a key management datacenter connected to the first and second user sites and configured to generate both the first and second encryption keys whereby the datacenter is operative to decrypt encrypted data sent by the first user site with the first encryption key and encrypt the data with the second encryption key and transmit the encrypted data to the second user site.

2. A secure communication system as recited in claim 1, wherein the first user site is operative to generate a different first encryption key each time encrypted data is transmitted to the key management datacenter.

3. A secure communication system as recited in claim 2, wherein the second user site is operative to generate a different second encryption key each time encrypted data is transmitted from the datacenter to the second user site.

4. A secure communication system as recited in claim 3, wherein the datacenter is operative to generate the first encryption key each time the first user site generates a different first encryption key and to generate the second encryption key each time the second user site generates a different second encryption key.

5. A secure communication system as recited in claim 4, wherein each first and second user site includes a respective smartcard, wherein the smartcard at the first user site is operative to generate the first encryption key and the smartcard at the second user site is operative to generate the second encryption key.

6. A method for securing communications over a system having a plurality of users, the system including at least first and second user sites connected to a key management datacenter, the method comprising the steps of:
encrypting data with a first encryption key at the first user site;
transmitting the data to the key management data center;
decrypting the data with the first encryption key at the key management datacenter after it has been received from the first user site;
encrypting the data with a second encryption key at the key management datacenter;
transmitting the data to the second user site; and
decrypting the data with the first encryption key at the second user site after it has been received from the key management datacenter.

7. A method for securing communications as recited in claim 6, further including the steps of:
changing the first encryption key in the first user site each time data is sent to the key management datacenter; and
changing the first encryption key in the key management datacenter to be identical to the first encryption key used to encrypt the data transmitted from the first user site.

8. A method for securing communications as recited in claim 7, further including the steps of:
changing the second encryption key in the key management data center each time data is sent to the second user site; and
changing the second encryption key in the second user site to be identical to the second encryption key used to encrypt the data transmitted from the key management data center.

9. A method for transmitting data between at least first and second user sites in a communication system secured by a key management data center, the method comprising the steps of:
selecting a destination address for the data to be transmitted from the first user site to the second user site;
encrypting the data and the destination address with a first encryption key in the first user site;
transmitting the encrypted data and destination address from the first user site to the key management data center;
decrypting the encrypted data and destination address in the key management center with the first encryption key;
generating a second encryption key in the key management center in dependence upon the destination address of the second user site;
encrypting the data with the second encryption key in the key management datacenter;
transmitting the encrypted data from the key management datacenter to the destination address of the second user site; and
decrypting the encrypted data in the second user site with the second encryption key.

10. A method for transmitting data as recited in claim 9, further including the steps of:
changing the first encryption key in the first user site each time data is sent to the key management datacenter; and
changing the first encryption key in the key management datacenter to be identical to the first encryption key used to encrypt the data transmitted from the first user site.

11. A method for securing communications as recited in claim 10, further including the steps of:
changing the second encryption key in the key management data center each time data is sent to the second user site; and
changing the second encryption key in the second user site to be identical to the second encryption key used to encrypt the data transmitted from the second user site.

12. A method for securing communications as recited in claim 8 or claim 11, further including the step of:
generating the first encryption key at the first user site from information contained in a smartcard.

13. A method for securing communications as recited in claim 12, further including the step of:
generating the second encryption key at the second user site from information contained in a smartcard.
